# EUROPÄISCHE PATENTSCHRIFT

(11) **EP 2 907 696 B1**
(45) Veröffentlichungstag und Bekanntmachung des Hinweises auf die Patenterteilung: **05.09.2018**
(21) Anmeldenummer: 14155534.2
(22) Anmeldetag: 18.02.2014
(51) Int. Cl.: B60P 7/15, B64C 1/20

(54) **Sperrbalken für ein Ladungssicherungssystem**
Blocking bar for a load securing system
Barre de blocage pour un système de sécurisation de charge

(43) Veröffentlichungstag der Anmeldung: 19.08.2015
(73) Patentinhaber: WISTRA GmbH Cargo Control, 23923 Selmsdorf (DE)
(72) Erfinder: Born, Kurt-Rudolf, 23923 Herrnburg (DE)
(74) Vertreter: Patentanwälte Vollmann & Hemmer

(56) Entgegenhaltungen:
- WO-A1-02/04246
- US-A- 3 570 412
- US-A- 3 620 171
- US-A- 4 230 432
- US-A1- 2003 080 586

## Beschreibung

Die Erfindung betrifft einen Sperrbalken für ein Ladungssicherungssystem gemäß dem Oberbegriff des Anspruchs 1 sowie ein Ladungssicherungssystem, welches einen derartigen Sperrbalken umfasst.

Ladungssicherungssysteme, insbesondere für Fahrzeuge mit leichtem Aufbau, umfassen zum sicheren Transport von Gütern im Straßenverkehr oft sogenannte Airlinesysteme mit genuteten Schienen mit in einem vorbestimmten Rasterabstand angeordneten Bohrungen, welche in oder an Wand- und Bodenplatten des Fahrzeugladeraums fest montiert sind, und welche mit darin festlegbaren Sperrstangen- oder Sperrbalkensystemen zusammenwirken, um Ladung in einem Fahrzeug formschlüssig auf variable und an die Ladungsgröße und Form bzw. Anordnung angepasste Weise zu sichern.

Die Sperrbalken können beispielsweise durch hakenförmige Endzapfen oder durch federbelastete Endzapfen, welche eine schnelle und einfache Montage ermöglichen, in die dafür vorgesehenen Airlineschienen oder in anderen geeigneten Aufnahmepunkten gehalten werden.

Bei der Verwendung von federbelasteten Endzapfen, welche eine begrenzte Teleskopierbarkeit entsprechend des Federhubs vorsehen, muss die Federspannung einen sicheren Halt in der Airline- bzw. Zurrschiene sicherstellen. Bei der Verwendung mehrerer federbelasteter Sperrbalken erhöht sich jedoch dann die auf die Seitenwände wirkende Druckbelastung und kann so unter Umständen zum Ausbeulen und einer unzulässigen Beanspruchung der Wände des Fahrzeugs bzw. dessen Aufbaus führen. Darüber hinaus können federbelastete Sperrbalken im senkrechten Einsatz zu einer Beschädigung insbesondere leichter Fahrzeugdächer führen.

Bei den oben beschriebenen Ladungssicherungssystemen, welche Airlineschienen umfassen, sind diese bzw. deren Befestigungsmittel an die Fahrzeugkontur angepasst. Dadurch kann sich jedoch der lichte Abstand zwischen den jeweils gegenüberliegenden Schienen erheblich verändern, so dass ein großer Verstellbereich oder eine andere Längeneinstellung erforderlich.

Ein gattungsgemässer Sperrbalken ist beispielsweise aus der US 3,570,412 bekannt.

Vor diesem Hintergrund ist es die Aufgabe der vorliegenden Erfindung, einen Sperrbalken für ein Ladungssicherungssystem und ein Ladungssicherungssystem bereitzustellen, welche einen großen Verstellbereich ermöglichen und die oben genannten Probleme bei Verwendung von federbelasteten Endzapfen an Sperrbalken vermeiden.

Die Aufgabe wird gemäß der Erfindung durch einen Sperrbalken für ein Ladungssicherungssystem mit den Merkmalen gemäß Anspruch 1 und ein Ladungssicherungssystem mit den Merkmalen gemäß Anspruch 12 gelöst. Vorteilhafte Ausgestaltungen der Erfindung sind in den Unteransprüchen, der nachfolgenden Beschreibung und der Zeichnung angegeben.

Erfindungsgemäß bereitgestellt wird somit ein Sperrbalken für ein Ladungssicherungssystem, welcher mit einem ersten Ende in einer ersten Airlineschiene des Ladungssicherungssystems und mit einem zweiten Ende in einer zweiten Airlineschiene des Ladungssicherungssystems festlegbar ist, wobei das erste Ende und das zweite Ende des Sperrbalkens jeweils in alle Richtungen formschlüssig in der jeweiligen Airlineschiene festlegbar sind und wobei der Sperrbalken teleskopierbar ausgebildet ist. Somit ist die Länge des Sperrbalkens einerseits variabel an die jeweilige Raumsituation anpassbar. Gleichzeitig wird jedoch durch die erfindungsgemäße Konfiguration eine sichere Fixierung des Sperrbalkens in den beidseitigen Airlineschienen gewährleistet, ohne dass dadurch eine Federspannung aufgebaut wird, welche das Dach oder die Seitenwände des Aufbaus deformiert oder sogar beschädigt.

Vorzugsweise ist der Sperrbalken stufenlos teleskopierbar, so dass eine beliebige Länge des Sperrbalkens einstellbar ist.

Gemäß einer bevorzugten Ausführungsform umfasst der Sperrbalken ein erstes Rohr, ein zweites Rohr sowie ein Teleskoprohr, das an einer Seite in dem ersten Rohr und an der anderen Seite in dem zweiten Rohr aufnehmbar ist.

Dabei kann das erste Rohr gemäß einer weiteren bevorzugten Ausführungsform länger als das zweite Rohr sein. Die Verwendung eines langen Außenrohrs bzw. ersten Rohrs und eines nur geringfügig kürzeren Teleskoprohrs ermöglicht einen großen Verstellbereich.

Das Teleskoprohr kann einseitig, insbesondere mit dem zweiten Rohr fest verbunden sein.

Darüber hinaus ist es vorteilhaft, wenn das Teleskoprohr in dem ersten Rohr in Längsrichtung stufenlos verschiebbar und in der gewünschten Position bzw. in der jeweils erforderlichen Länge arretierbar ist. Eines von dem ersten und dem zweiten Ende des Sperrbalkens ist mit zumindest zwei zum Festlegen in der Airlineschiene vorgesehenen Formschlusselementen versehen, von denen mindestens eines am Sperrbalken fest und das andere in Längsrichtung des Sperrbalkens bewegbar angeordnet ist. Diese speziellen Verriegelungen ermöglichen eine sichere Verbindung des Sperrbalkens in der Airlineschiene, ohne eine Federspannung zum Dach oder auf die Seitenwände auszuüben. An zumindest einem von dem ersten und dem zweiten Ende des Sperrbalkens, insbesondere an beiden Enden, ist ein federbelasteter Bolzen mit einem an eine innere Führung der Airlineschiene angepassten Kopf angeordnet, welcher aus dem Ende des Sperrbalkens ausfahrbar und in der Airlineschiene formschlüssig festlegbar ist. Hierzu kann der Kopf in einer entsprechenden Bohrung in der Airlineschiene positioniert werden und dann zur Verriegelung seitlich um ein halbes Lochraster verschoben werden, wobei er dann in dieser Position durch das erste am Sperrbalken feststehende Formschlusselement gehalten und durch Formschluss gesichert wird. Dabei ist das erste nicht bewegbare Formschlusselement ein Zentrierelement, welches an einem äußeren Umfang des Federbolzens angeordnet ist, und welches ausgebildet ist, um ein laterales Verschieben des Federbolzens in der Airlineschiene zu blockieren.

Das zweite Formschlusselement wird durch den federbelasteten Bolzen gebildet, welcher durch einen federbelasteten Sicherungsring, welcher an einem äußeren Umfang des Zentrierelements angeordnet und entlang des äußeren Umfangs des Zentrierelements verschiebbar ist, axial in der Airlineschiene formschlüssig fixierbar ist.

Somit wird der Sperrbalken in der Airlineschiene in allen möglichen Raumrichtungen blockiert und darin sicher in Position gehalten.

Gemäß noch einer weiteren bevorzugten Ausführungsform ist an einer Ausnehmung an einer Innenwandung des Sicherungsrings eine Kugel zum Arretieren des Sicherungsrings an einer vorbestimmten Position an dem äußeren Umfang des Zentrierelements angeordnet. Der Sicherungsring mit der innenliegenden Kugel ist über leichten Federdruck in Richtung Airlineschiene, d. h. nach außen verschiebbar und hält den Federbolzen mittels einer selbsttätigen Verriegelung sicher in der Airlineschiene in Position.

Erfindungsgemäß wird darüber hinaus ein Ladungssicherungssystem bereitgestellt, welches Airlineschienen und zumindest einen Sperrbalken gemäß einer der obigen Ausführungsformen umfasst. Das mit dem erfindungsgemäßen Sperrbalken ausgestattete Ladungssicherungssystem weist die bereits oben beschriebenen Vorteile auf.

Die Erfindung wird nachfolgend anhand eines in der Zeichnung dargestellten Ausführungsbeispiels näher erläutert. Es zeigen:
- Fig. 1A: eine Ansicht eines Sperrbalkens gemäß einer Ausführungsform der Erfindung,
- Fig. 1B: eine Ansicht nach Fig. 1A in teilgeschnittener Darstellung,
- Fig. 2: eine vergrößerte Schnittansicht durch den in Fig. 1A dargestellten Sperrbalken,
- Fig. 3: eine perspektivische Ansicht eines ersten Endes des in Fig. 1A und Fig. 1B bzw. Fig. 2 dargestellten Sperrbalkens,
- Fig. 4: eine Draufsicht auf eine Airlineschiene, und
- Fig. 5A, Fig. 5B: jeweilige Ansichten des in Fig. 2 gezeigten ersten Endes des Sperrbalkens, aufgenommen in einer Airlineschiene.

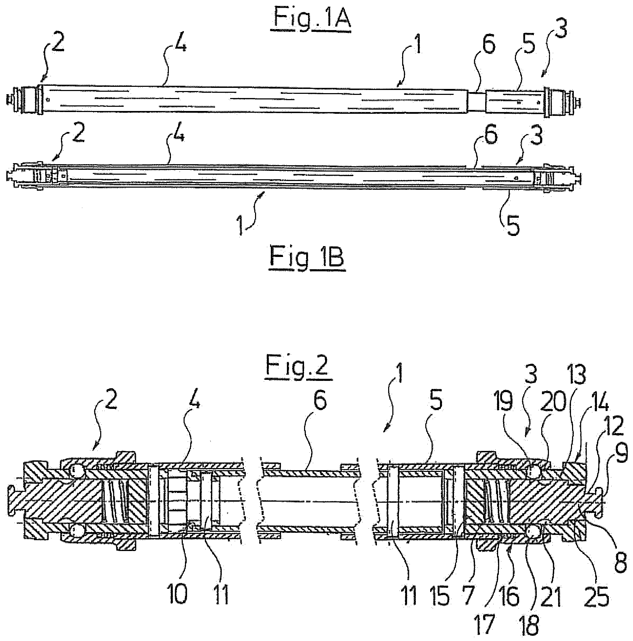

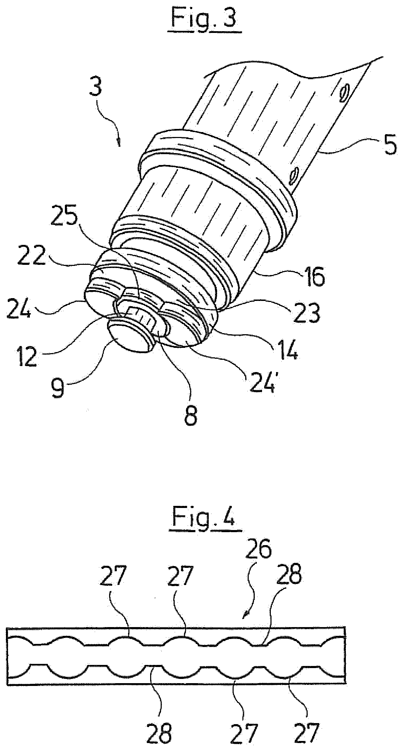

Fig. 1A und Fig. 1B zeigen jeweilige Ansichten eines Sperrbalkens 1 für ein Ladungssicherungssystem gemäß einer Ausführungsform der Erfindung, wobei Fig. 1A eine Ansicht des Sperrbalkens 1 und Fig. 1B eine teilweise geschnittene Ansicht des Sperrbalkens 1 ist. Wie hier erkennbar ist, weist der Sperrbalken ein erstes Ende 2 und ein zweites Ende 3 auf, mit welchen er in jeweiligen Airlineschienen (siehe Fig. 3A, Fig. 3B) in allen Raumrichtungen formschlüssig festlegbar sind. Das erste Ende 2 ist hier das in der Zeichnung linke Ende eines ersten Rohrs 4 und das zweite Ende 3 ist hier das in der Zeichnung rechte Ende eines zweiten Rohrs 5. Das erste Rohr 4 ist wesentlich länger ausgebildet als das zweite Rohr 5 und zwischen dem ersten Rohr 4 und dem zweiten Rohr 5 ist darüber hinaus ein Teleskoprohr 6 angeordnet, welches einen etwas geringeren Durchmesser aufweist als das erste Rohr 4 und das zweite Rohr 5, so dass es in dem ersten Rohr 4 und dem zweiten Rohr 5 aufnehmbar ist. Das Teleskoprohr 6 ist einseitig fest mit dem zweiten Rohr 5 verbunden und lässt sich in dem ersten Rohr 4 in Längsrichtung stufenlos verschieben. Aufgrund dieser Anordnung des ersten Rohrs 4, des zweiten Rohrs 5 und des Teleskoprohrs 6 ist der Sperrbalken 1 stufenlos teleskopierbar, d. h. seine Länge ist über einen großen Verstellbereich, nämlich im Wesentlichen der Länge des ersten Rohrs 5 variabel. Die maximale Auszugslänge wird hierbei unter Berücksichtigung der erforderlichen Überdeckung von dem ersten Rohr 4 und dem Teleskoprohr 6 durch eine Markierung (hier nicht dargestellt) kenntlich gemacht.

Fig. 2 zeigt eine Schnittansicht durch den in Fig. 1A und Fig. 1B dargestellten Sperrbalken 1 mit seinem ersten Ende 2 und seinem zweiten Ende 3. Das erste Ende 2 ist ein äußeres Ende des ersten Rohrs 4 und das zweite Ende 3 ist das entgegengesetzte äußere Ende des zweiten Rohrs 5. Dazwischen befindet sich das Teleskoprohr 6. Um ein unbeabsichtigtes Herausfallen des Teleskoprohrs 6 aus dem ersten Rohr 4, mit welchem das Teleskoprohr 6 nicht fest verbunden ist, zu verhindern, ist stirnseitig an der inneren Führung ein Gleitstück 10 vorgesehen. Vor dem Gleitstück 10 ist an dem äußeren Umfang des Teleskoprohrs 6 darüber hinaus ein Spannstift 11 vorgesehen.

Da die beiden Enden 2, 3 des Sperrbalkens 1 in der hier dargestellten Ausführungsform im Wesentlichen identisch ausgebildet sind, wird nur das in der Darstellung rechte Ende, welches hier das zweite Ende 3 ist, beschrieben. Wie hier erkennbar ist, weist das zweite Ende 3 des zweiten Rohrs 5 einen mittig angeordneten, durch eine erste Feder 7 belasteten Bolzen 8 auf, welcher an seinem äußeren Ende mit einem Kopf 9 ausgestattet ist, welcher der inneren Führung einer Airlineschiene (siehe Fig. 4A und 4B) angepasst ist und von dem zweiten Ende 3 des Sperrbalkens 1 über die Länge eines an dem Kopf 9 angeordneten Schafts 12 abragt. Der Bolzen 8 weist weiterhin einen im Wesentlichen zylindrischen Teil 13 mit einem ersten kleineren Durchmesser und einem zweiten etwas größeren Durchmesser auf, wobei an dem dem äußeren Umfang des zylindrischen Teils 13 etwas größeren Durchmesser eine umlaufende Nut 21 mit im Wesentlichen halbrundem Querschnitt vorgesehen ist. Weiterhin ist der äußere Umfang des zylindrischen Teils von einem Zentrierstück 14 umgeben, welches fest mit dem zweiten Rohr 4 verbunden ist und demgegenüber unbeweglich ist. Dagegen ist der Bolzen 8 in dem durch das Zentrierstück 14 und eine in dem Zentrierstück 14 angeordnete Scheibe 15 gebildeten Innenraum axial bewegbar. Das Zentrierstück 14 bildet ein erstes feststehendes und nicht bewegliches Formschlusselement zum formschlüssigen Halten des Sperrbalkens 1 in einer Airlineschiene, wie noch genauer in Zusammenhang mit Fig. 3A, Fig. 4A und Fig. 4B beschrieben wird, und der Bolzen 8 bildet ein zweites axial bewegbares Formschlusselement in Form des Kopfes 9, der ein axiales Bewegen des Sperrbalkens 1 aus der Airlineschiene heraus verhindert, wenn dieser lateral verschoben zwischen zwei Bohrungen der Airlineschiene angeordnet ist.

Weiterhin ist an dem äußeren Umfang des Zentrierstücks 14 zwischen dem äußeren Ende des zweiten Rohrs 4 und einem Sicherungsring 16 eine zweite Feder 17, welche den Sicherungsring 16 zum freien Ende des Zentrierstücks 14 hin kraftbeaufschlagt, angeordnet. Zum axialen Feststellen des Bolzens 8 bzw. des Kopfs 9 in der Airlineschiene wird der Sicherungsring 16 über den Federdruck der Feder 17 nach außen verschoben, wenn der Bolzen 8 gegen die Kraft der Feder 7 nach innen gedrückt wird. Dabei kann eine an einer entsprechenden im Querschnitt halbrunden umlaufenden Nut 19 an der Innenwand des Sicherungsrings 14 anliegende Kugel 18 durch eine Ausnehmung 20 in dem Zentrierstück 14 in die im Querschnitt halbrunde umlaufende Nut 21 an dem äußeren Umfang des Bolzens 8 gelangen und der Sicherungsring 16 zum Ende nach außen geschoben werden, in welcher Stellung er den Bolzen 8 axial in der Airlineschiene festlegt bzw. in Position hält. Eine Festlegung auf der anderen Seite des Sperrbalkens 1 bzw. an dessen ersten Ende 2 erfolgt analog durch Ausziehen des ersten Rohrs 4 und selbsttätiger Verriegelung des Zentrierstücks 14. Eine Entriegelung erfolgt durch wechselseitiges Verschieben des Sicherungsrings 16 nach innen. Die Fixierung des federbelasteten Bolzens 8 wird hierdurch gelöst und das Zentrierstück 14 kann aus der Airlineschiene gezogen werden, wonach der Kopf 9 seitlich in der Airlineschiene bewegt und im Bereich einer Bohrung aus der Schiene herausgezogen werden kann.

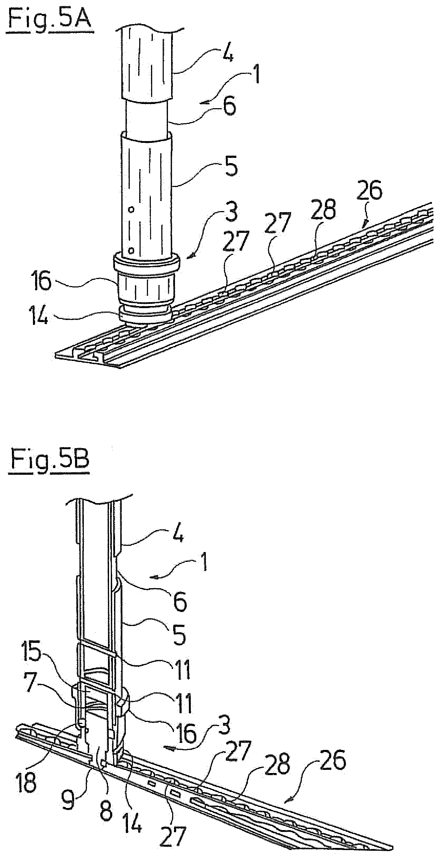

Fig. 3 ist eine perspektivische Ansicht des zweiten Endes 3 des in Fig. 2 dargestellten Sperrbalkens 1, welches im Wesentlichen identisch zu dem ersten Ende 2 des Sperrbalkens 1 ausgebildet ist. Von dem äußeren Ende des zweiten Endes 3 ragt der Kopf 9 des federbelasteten Bolzens 8 vor. Der Bolzen 8 ist, wie oben beschrieben, axial begrenzt beweglich innerhalb des Zentrierstücks 14 geführt, welches an seinem Ende ein Formschlusselement in Form von zwei Vorsprüngen 24 aufweist, die den Kopf 9 diametral umgeben. Wie hier gut erkennbar ist, wird das Zentrierstück 14 durch ein Scheibenelement 22 aufgebaut, an dessen Außenseite 23 ein erster Vorsprung 24 und ein zweiter Vorsprung 24' vorgesehen ist. Der erste Vorsprung 24 und der zweite Vorsprung 24' sind gegenüberliegend an einer runden mittigen Öffnung 25 angeordnet, durch welche der Kopf 9 und der Schaft 12 des Bolzens 8 hindurch ragen. Der erste Vorsprung 24 und der zweite Vorsprung 24' entsprechen in ihrer Form und in ihrer Anordnung auf dem Scheibenelement 22 jeweils im Wesentlichen den in einem vorbestimmten Rasterabstand benachbart angeordneten Bohrungen (siehe Fig. 4) in einer Airlineschiene, so dass sie in montiertem Zustand des Sperrbalkens 1 genau in zwei benachbarte Bohrungen in der Airlineschiene passen (siehe Fig. 5A, Fig. 5B).

Fig. 4 ist eine Draufsicht auf eine Airlineschiene 26, welche in einem vorbestimmten Rasterabstand angeordnete Bohrungen 27 aufweist. Jeweils zwei benachbarte Bohrungen 27 sind über einen stegartig verengten Abschnitt 28 miteinander verbunden. Wenn der Kopf 9 des Bolzens 8 (siehe Fig. 3) in eine der Bohrungen 27 eingefahren wird und lateral in der Schiene 26 soweit verschoben wird, bis er genau zwischen zwei benachbarten Bohrungen 27 angeordnet ist, so liegt er genau unterhalb eines stegartig verengten Abschnitts 28 und greift unter diesen, so dass er nicht nach oben aus der Airlineschiene 26 herausgezogen werden kann. Ein seitliches Verschieben in Richtung einer Bohrung 27, durch welche der Kopf 9 aus der Airlineschiene 26 entfernbar ist, verhindert in montiertem Zustand des Sperrbalkens 1 jedoch die oben in Zusammenhang mit Fig. 3 beschriebenen ersten und zweiten Vorsprünge 24, 24' des Zentrierstücks 14.

Fig. 5A und Fig. 5B sind jeweilige Ansichten des in Fig. 2 gezeigten zweiten Endes 3 des Sperrbalkens 1, welcher hier aufgenommen und fixiert in einer Airlineschiene 26 dargestellt ist, wobei Fig. 5A eine perspektivische Ansicht und Fig. 5B eine geschnittene Ansicht der Darstellung von Fig. 5A ist. Wie hier erkennbar ist, ist das zweite Ende 3 des Sperrbalkens 1 in der Airlineschiene 26 angeordnet und ragt im Wesentlichen senkrecht aus dieser heraus. Der Kopf 9 des federbelasteten Bolzens 8, welcher der inneren Führung der Airlineschiene 26 angepasst ist, wurde hierzu senkrecht in eine Bohrung 27 der in vorbestimmten Abstand voneinander angeordneten Vielzahl von Bohrungen 27 in der Airlineschiene 26 eingefahren und dann seitlich bzw. lateral, d. h. in Längsrichtung der Airlineschiene 26 um ein halbes Lochraster in der Schiene verschoben, bis der Kopf 9 genau zwischen zwei benachbarten Bohrungen 27 angeordnet ist. In dieser Position wird dann das Zentrierstück 14 mit dem ersten Vorsprung 24 und dem zweiten Vorsprung 24' genau in diese zwei benachbarten Bohrungen 27 eingefahren und damit festgelegt. So blockiert das Zentrierstück 14 eine laterale Bewegung des Sperrbalkens 1 in der Airlineschiene 26. In dieser Position ist dann der Sicherungsring 16 auf die in Zusammenhang mit Fig. 2 beschriebene Weise durch Federkraft nach außen geschoben, um eine axiale Festlegung des Sperrbalkens 1 zu erreichen, so dass dieser im Ergebnis in allen Richtungen formschlüssig in der Airlineschiene 26 gesichert ist. Analog wird mit dem ersten Ende 2 des Sperrbalkens 1 verfahren, um dieses ebenfalls in einer entsprechenden Airlineschiene zu sichern. Zum Lösen der Verbindung ist zunächst der Sicherungsring 16 erst gegen Federkraft nach innen zu ziehen, wonach die Vorsprünge 24 und 24' außer Eingriff der Schiene gebracht werden und dann der Kopf 9 lateral verschoben und ebenfalls aus der Schiene entfernt wird.

### Bezugszeichenliste

- 1: - Sperrbalken
- 2: - erstes Ende
- 3: - zweites Ende
- 4: - erstes Rohr
- 5: - zweites Rohr
- 6: - Teleskoprohr
- 7: - erste Feder
- 8: - Bolzen
- 9: - Kopf
- 10: - Gleitstück
- 11: - Spannstift
- 12: - Schaft
- 13: - zylindrischer Teil des Bolzens
- 14: - Zentrierstück
- 15: - Scheibe
- 16: - Sicherungsring
- 17: - zweite Feder
- 18: - Kugel
- 19: - umlaufende Nut im Sicherungsring
- 20: - Ausnehmung in dem Zentrierstück
- 21: - umlaufende Nut am Bolzen
- 22: - Scheibenelement des Zentrierstücks
- 23: - Außenseite des Scheibenelements
- 24, 24': - erster und zweiter Vorsprung
- 25: - Öffnung in dem Zentrierstück
- 26: - Airlineschiene
- 27: - Bohrungen
- 28: - stegartig verengter Abschnitt

## Patentansprüche

1. Sperrbalken (1) für ein Ladungssicherungssystem, welcher mit einem ersten Ende (2) in einer ersten Airlineschiene (26) des Ladungssicherungssystems und mit einem zweiten Ende (3) in einer zweiten Airlineschiene (26) des Ladungssicherungssystems festlegbar ist, wobei das erste Ende (2) und das zweite Ende (3) des Sperrbalkens (1) jeweils in allen Richtungen formschlüssig in der jeweiligen Airlineschiene (26) festlegebar ist und der Sperrbalken (1) teleskopierbar ausgebildet ist, **dadurch gekennzeichnet, dass** zumindest eines von dem ersten und dem zweiten Ende (2, 3) des Sperrbalkens (1) mit zumindest zwei zum Festlegen in der Airlineschiene (26) vorgesehenen Formschlusselementen versehen ist, von denen mindestens eines am Sperrbalken (1) fest und das andere in Längsrichtung des Sperrbalkens (1) bewegbar angeordnet ist, und dass ein federbelasteter Bolzen (8) angeordnet ist, welcher aus dem Ende (2, 3) des Sperrbalkens (1) ausfahrbar und in der Airlineschiene (26) formschlüssig festlegbar ist, wobei das erste nicht bewegbare Formschlusselement ein Zentrierelement (14) ist, welches an einem äußeren Umfang des Federbolzens (8) angeordnet ist und welches ausgebildet ist, um ein laterales Verschieben des Federbolzens in der Airlineschiene zu blockieren und dass das zweite Formschlusselement bewegbar ist und durch den federbelasteten Bolzen (8) gebildet wird, welcher durch eine federbelasteten Sicherungsring (16), welcher an einem äußeren Umfang des Zentrierelements (14) angeordnet und entlang des äußeren Umfangs des Zentrierelements (14) verschiebbar ist, axial in der Airlineschiene (26) fixierbar ist.

2. Sperrbalken (1) gemäß Anspruch 1, **dadurch gekennzeichnet, dass** der Sperrbalken (1) stufenlos teleskopierbar ist.

3. Sperrbalken (1) gemäß Anspruch 1 oder 2, **dadurch gekennzeichnet, dass** der Sperrbalken (1) ein erstes Rohr (4), ein zweites Rohr (5) sowie ein Teleskoprohr (6), das an einer Seite in dem ersten Rohr (4) und an der anderen Seite in dem zweiten Rohr (5) aufnehmbar ist, umfasst.

4. Sperrbalken (1) gemäß Anspruch 3, **dadurch gekennzeichnet, dass** das erste Rohr (4) länger als das zweite Rohr (5) ist.

5. Sperrbalken (1) gemäß Anspruch 3 oder 4, **dadurch gekennzeichnet, dass** das Teleskoprohr (6) einseitig, insbesondere mit dem zweiten Rohr (5), fest verbunden ist.

6. Sperrbalken (1) gemäß einem der Ansprüche 3 bis 5, **dadurch gekennzeichnet, dass** das Teleskoprohr (6) in dem ersten Rohr (4) in Längsrichtung stufenlos verschiebbar ist und in der gewünschten Position arretierbar ist.

7. Sperrbalken (1) gemäß einem der vorhergehenden Ansprüche, **dadurch gekennzeichnet, dass** an beiden Enden (2, 3) des Sperrbalkens ein federbelasteter Bolzen (8) angeordnet ist.

8. Sperrbalken (1) gemäß einem der vorhergehenden Ansprüche, **dadurch gekennzeichnet, dass** an einer Ausnehmung (19) an einer Innenwandung des Sicherungsrings (16) eine Kugel (20) angeordnet ist zum Arretieren des Sicherungsrings (16) an einer vorbestimmten Position an dem äußeren Umfang des Zentrierelements (14).

9. Ladungssicherungssystem, welches Airlineschienen (26) und zumindest einen Sperrbalken (1) gemäß einem der Ansprüche 1 bis 8 umfasst.

## Claims

1. A blocking bar (1) for a load securing system, said blocking bar with a first end (2) being able to be fixed in a first airline track (26) of the load securing system and with a second end (3) in a second airline track (26) of the load securing system, wherein the first end (2) and the second end (3) of the blocking bar (1) can each be positively fixed in the respective airline track (26) in all directions and the blocking bar (1) is designed in a telescopic manner, **characterised in that** at least one of the first and the second end (2, 3) of the blocking bar (1) is provided with at least two positive-fit elements which are provided for fixation in the airline track (26) and of which at least one is fixedly arranged on the blocking bar (1) and the other is movably arranged in the longitudinal a direction of the blocking bar (1) and that a spring-loaded bolt (8) is provided, said bolt being extendable out of the end (2, 3) of the blocking bar (1) and being positively fixable in the airline track (26), wherein the first, non-movable positive-fit element is a centring element (14) which is arranged on an outer periphery of the spring bolt (8) and which is designed to block a lateral displacement of the spring bolt in the airline track and that the second positive-fit element is movable and is formed by the spring-loaded bolt (8) which is axially fixable in the airline track (26) by a spring-loaded securing ring (16) which is arranged on an outer periphery of the centring element (14) and is displaceable along the outer periphery of the centring element (14).

2. A blocking bar (1) according to claim 1, **characterised in that** the blocking bar (1) is steplessly telescopable.

3. A blocking bar (1) according to claim 1 or 2, **characterised in that** the blocking bar (1) comprises a first tube (4), a second tube (5) as well as a telescopic tube (6) which at one side can be received in the first tube (4) and at the other side in the second tube (5).

4. A blocking bar (1) according to claim 3, **characterised in that** the first tube (4) is longer than the second tube (5).

5. A blocking bar (1) according to claim 3 or 4, **characterised in that** the telescopic tube (6) is fixedly connected at one side, in particular to the second tube (5).

6. A blocking bar (1) according to one of the claims 3 to 5, **characterised in that** the telescopic tube (6) is steplessly displaceable in the first tube (4) in the longitudinal direction and can be arrested in the desired position.

7. A blocking bar (1) according to one of the preceding claims, **characterised in that** a spring-loaded bolt (8) is arranged at both ends (2, 3) of the blocking bar.

8. A blocking bar (1) according to one of the preceding claims, **characterised in that** a ball (20) for arresting the securing ring (16) at a predefined position on the outer periphery of the centring element (14) is arranged on a recess (19) on an inner wall of the securing ring (16).

9. A load securing system which comprises airline tracks (26) and at least one blocking bar (1) according to one of the claims 1 to 8.

## Revendications

1. Barre de blocage (1) pour un système de sécurisation de charge, laquelle est adaptée pour être immobilisée par une première extrémité (2) dans un premier rail d'arrimage (26) du système de sécurisation de charge et par une seconde extrémité (3) dans un deuxième rail d'arrimage (26) du système de sécurisation de charge, la première extrémité (2) et la seconde extrémité (3) de la barre de blocage (1) étant adaptées pour être immobilisées par complémentarité de forme dans toutes les directions dans le rail d'arrimage (26) respectif et la barre de blocage (1) étant configurée de façon télescopique, **caractérisée en ce qu'**au moins une des première et seconde extrémités (2, 3) de la barre de blocage (1) est pourvue de deux éléments à complémentarité de forme pour l'immobilisation dans le rail d'arrimage (26), dont au moins un est disposé de manière fixe sur la barre de blocage (1) et dont l'autre est disposé de manière à être mobile dans la direction longitudinale de la barre de blocage (1), et **en ce qu'**une broche (8) qui est sous la contrainte d'un ressort est disposée laquelle est adaptée pour être sortie de l'extrémité (2, 3) de la barre de blocage (1) et être immobilisée dans le rail d'arrimage par complémentarité de forme, le premier élément à complémentarité de forme non mobile étant un élément de centrage (14) qui est disposé sur un pourtour extérieur de la broche (8) sous contrainte d'un ressort et qui est configuré pour empêcher un déplacement latéral de la broche sous contrainte d'un ressort dans le rail d'arrimage et **en ce que** le deuxième élément à complémentarité de forme est mobile et est constitué par la broche (8) sous contrainte d'un ressort, qui est adaptée pour être fixée axialement dans le rail d'arrimage (26) par une bague de sécurité (16) qui est sous la contrainte d'un ressort, laquelle bague est disposée sur un pourtour extérieur de l'élément de centrage (14) et est adaptée pour être déplacée le long du pourtour extérieur de l'élément de centrage (14).

2. Barre de blocage (1) selon la revendication 1, **caractérisée en ce que** la barre de blocage (1) peut être actionnée de manière télescopique sans étagement.

3. Barre de blocage (1) selon la revendication 1 ou 2, **caractérisée en ce que** la barre de blocage (1) comprend un premier tube (4), un deuxième tube (5) ainsi qu'un tube télescopique (6) qui est adapté pour être reçu d'un côté dans le premier tube (4) et de l'autre côté dans le deuxième tube (5).

4. Barre de blocage (1) selon la revendication 3, **caractérisée en ce que** le premier tube (4) est plus long que le deuxième tube (5).

5. Barre de blocage (1) selon la revendication 3 ou 4, **caractérisée en ce que** le tube télescopique (6) est solidaire d'un côté, notamment du deuxième tube (5).

6. Barre de blocage (1) selon l'une des revendications 3 à 5, **caractérisée en ce que** le tube télescopique (6) est adapté pour être déplacé de manière continue dans la direction longitudinale dans le premier tube (4) et pour être arrêté dans la position souhaitée.

7. Barre de blocage (1) selon l'une des revendications précédentes, **caractérisée en ce qu'**aux deux extrémités (2, 3) de la barre de blocage, il est disposé une broche (8) qui est sous la contrainte d'un ressort.

8. Barre de blocage (1) selon l'une des revendications précédentes, **caractérisée en ce qu'**une bille (20) est disposée dans un évidement (19) sur une paroi intérieure de la bague de sécurité 16), pour arrêter la bague de sécurité (16) dans une position prédéterminée sur le pourtour extérieur de l'élément de centrage (14).

9. Système de sécurisation de charge qui comprend des barres d'arrimage (26) et au moins une barre de blocage (1) selon l'une des revendications 1 à 8.
